# EUROPÄISCHE PATENTANMELDUNG

(11) **EP 2 500 608 A1**
(43) Veröffentlichungstag der Anmeldung: **19.09.2012**
(21) Anmeldenummer: 12001695.1
(22) Anmeldetag: 13.03.2012
(51) Int. Cl.: F16K 11/074, F16K 11/085

(54) **Ventil für flüssige Medien, insbesondere für den Einsatz in Heizungs- und/oder Photothermikanlagen**

(30) Priorität: 14.03.2011 DE 102011013807
(71) Anmelder: PAW GmbH & Co. KG, 31789 Hameln (DE)
(72) Erfinder: Vehmeier, Jörg, 32791 Lage (DE); Heinke, Martin Karl, 31789 Hameln (DE)
(74) Vertreter: Jabbusch, Matthias

(57) **Zusammenfassung**

Bei einem Ventil für flüssige Medien, insbesondere für den Einsatz von Heizungs- und/oder Photothermikanlagen, umfassend einen Ventilgehäuse zur Aufnahme eines Ventilkükens in einer Querfließverbindung zwischen zwei durch das Ventilgehäuse hindurchgeführten Mediendurchgangskanälen, ist vorgesehen, dass etwa auf Höhe des Ventilkükens (14) das Ventilgehäuse (19) mit einem Anschluss für zumindest einen weiteren Mediumkanal (10) ausgerüstet ist.

## Beschreibung

Die Erfindung betrifft ein Ventil für flüssige Meiden, insbesondere für den Einsatz in Heizungs- und/oder Photothermikanlagen, umfassend ein Ventilgehäuse zur Aufnahme eines Ventilkükens in einer Querfließverbindung zwischen zwei durch das Ventilgehäuse hindurchgeführten Mediendurchgangskanälen. Die Erfindung betrifft des Weiteren ein Verfahren zum Betreiben einer Heizungsanlage mit zumindest einem Heißwasserkreislauf zum Beschicken von Heizungsradiatoren, mit einem Mediumspeicher und mit zumindest einem vorgenannten Ventil.

Das vorbezeichnete Ventil weist zwei Mediendurchgangskanäle auf. Wird es in eine Heizungsanlage eingesetzt, kann durch einen Mediendurchgangskanal der Vorlauf beispielsweise zu einem als Radiator ausgebildeten Heizkörper geführt sein, während der vom Heizkörper zurückkommende Rücklauf durch den anderen Mediumdurchgangskanal geführt wird.

Ein in einem derartigen Ventil aufgenommenes Ventilküken befindet sich in einer Querfließverbindung zwischen den Mediendurchgangskanälen. Bei einer teilweisen oder ganzen Offenstellung des Ventilkükens kann erreicht werden, dass Medien von dem einen Mediendurchgangskanal zum anderen Mediendurch-gangskanal fließen können. Auf diese Weise kann beispielsweise aus dem Rücklauf vom Heizkörper stammendes Heizmedium noch einmal in den Vorlauf geführt werden, um einen Kreislauf über den Heizkörper auszubilden, ohne stets neues heißes Medium in den Vorlauf einzuführen.

Der Erfindung liegt die Aufgabe zu Grunde, ein Ventil der eingangs genannten Gattung aufzuzeigen, das zumindest eine alternative Weiterverwendung des von einem Heizkörper zurückfließenden Mediums ermöglicht. Außerdem soll ein Verfahren zum Betreiben einer Heizungsanlage aufgezeigt werden, bei dem das vorbezeichnete Ventil eingesetzt wird, um eine Heizungsanlage energieschonend betreiben zu können.

Diese Aufgabe ist vorrichtungsseitig erfindungsgemäß dadurch gelöst, dass etwa auf Höhe des Ventilkükens das Ventilgehäuse mit einem Anschluss für zumindest einen weiteren Mediumkanal ausgerüstet ist.

An das erfindungsgemäße Ventil ist ein weiterer Mediumkanal anschließbar. Dadurch ist vorteilhaft eine weitere Möglichkeit für das von einem insbesondere als Radiator ausgebildeten Heizkörper zurückfließende Medium ausgebildet. Dieses Medium kann nicht nur wieder in den Vorlauf zu diesem Heizkörper geführt werden, sondern auch in den erfindungsgemäß vorgesehenen weiteren Mediumkanal. Über diesen Mediumkanal kann es beispielsweise zu einem zweiten Heizungskreislauf geführt werden, in dem der Vorlauf mit einem Medium mit geringerer Temperatur als bei einem als Radiator ausgebildeten Heizkörper beschickt werden kann. Derartige Heizungskreisläufe sind beispielsweise Fußbodenheizungen oder andere Flächenheizungen.

Bei dem erfindungsgemäßen Ventil wird der Anschluss für den weiteren Mediumkanal kompakt und einfach ausgeführt. Er wird einfach auf Höhe des Ventilkükens an das Ventilgehäuse herangeführt, der dafür vorgesehene Anschluss ist beispielsweise als Stutzen ausgebildet.

Nach einer ersten Weiterbildung der erfindungsgemäßen Vorrichtung ist vorgesehen, dass im Bereich des Anschlusses für den Mediumkanal ein mit dem Ventilküken zusammenwirkendes Verschlusselement für den Mediumkanal angeordnet ist. Der Anschluss für den weiteren Mediumkanal ist bevorzugt verschließbar ausgebildet, um nur nach Bedarf Medium in diesen Mediumkanal einzuführen. Das vorgesehene Verschlusselement wirkt nach dieser Weiterbildung mit dem Ventilküken zusammen, dadurch wird die durch das Ventil gegebene Verbindung zwischen beiden bereits vorhandenen Mediendurchgangskanälen sowie dem weiteren Mediumkanal in einem Ventil zusammengefasst. Es wird ein Dreiwegeventil ausgebildet, wobei lediglich durch eine Ventilbetätigung Medien in verschiedener Weise zwischen diesen drei Mediumfließwegen geleitet werden können.

Der vorgesehene Verschluss ist vorzugsweise derart konstruktiv ausgebildet, dass das Verschlusselement eine Platte mit Durchbrüchen ist und das am Ventilküken eine Gegenplatte mit korrespondierenden Durchbrüchen angeordnet ist. Beide Platten liegen im Ventil aneinander. Überdecken sich die Durchbrüche, ist ein Mediumfluss in den Mediumkanal ermöglicht. Erfolgt durch ein Bewegen des Ventilkükens eine Verschiebung der Gegenplatte, ist diese in eine Stellung bringbar, in der die Durchbrüche von Gegenplatte und Verschlusselementplatte nicht in ihrer Lage miteinander korrespondieren, dann ist der Zugang zu dem weiteren Mediumkanal versperrt.

Nach einer Weiterbildung ist vorgesehen, dass das Ventilküken in einer Führung verdrehbar ist und dass dem Ventilküken ein Motorantrieb zugeordnet ist. Das Drehen eines Ventilkükens ist eine ausgereifte Konstruktion, auch Motorantriebe werden dafür vorgesehen. Für das erfindungsgemäße Ventil ist ein derartiger Motorantrieb möglich, wobei ein handelsüblicher 90°-Schrittmotor ausreicht.

Nach einer nächsten Weiterbildung ist vorgesehen, dass das Ventil in einen Heizungskreislauf mit zumindest einem Speicher zur Bevorratung von Heizmedium eingesetzt ist, wobei der im Bereich des Ventilkörpers einmündende Mediumkanal bis zum Speicher verläuft und in diesen in etwa mittlerer Höhe eintritt. Nach dieser Weiterbildung ist der Mediumkanal bis zum Heizkörper geführt. Er mündet in diesen im mittleren Bereich ein, bei einer ausgebildeten Schichtung innerhalb des Speichers liegt dort ein Heizmedium mit mittleren Temperaturen vor. Dieses Heizmedium ist aber gerade für Fußbodenheizungen und Flächenheizungen geeignet, so dass vorzugsweise an dem Mediumkanal abzweigend eine Leitung zu einem Niedertemperaturheizkreis angeschlossen ist. Für den Niedertemperaturheizkreis reicht möglicherweise das von einem ersten Heißwasserkreislauf zurückfließende Medium nicht zu einem Betrieb aus. In diesem Fall kann aus dem mittleren Bereich des Speichers zusätzliches Heizmedium entnommen werden und zum Niedertemperaturheizkreis geführt werden. In diesen Niedertemperaturheizkreis kann wiederum ein erfindungsgemäßes Ventil eingesetzt sein, um auch im Rücklauf des Niedertemperaturheizkreises zurückfließendes Medium noch einmal in den Vorlauf des Niedertemperaturheizkreises zu leiten.

Zur weiteren Ausbildung des Ventils ist noch vorgesehen, dass eine Einstelleinheit zum Drehen des Ventilkükens an einer Vorderseite des Ventilgehäuses angeordnet ist und dass der Mediumkanal an der Rückseite des Ventilgehäuses in dieses einmündet. Die einfache konstruktive Ausbildung des erfindungsgemäßen Ventils war oben bereits angeführt worden. Der Verschluss für den Mediumkanal ist gemeinsam mit dem Küken für die übrigen Mediendurch-gangskanäle ausgebildet. Die Weiterbildung zeigt auf, dass dann auf der Höhe des Ventilkükens an der Rückseite des Ventilgehäuses der Anschluss für den Mediumkanal ist. Bei einem modularen Aufbau einzelner Ventilgruppen ist somit eine einfache Zuordnung weiterer Mediumkanäle möglich. Die Ventile müssen dazu in einem definierten Abstand zu einer Wand angeordnet sind, an der sie befestigt werden, um einen Bauraum für den Mediumkanal und seinen jeweiligen Anschluss auszubilden.

Die verfahrensseitige Lösung der Aufgabe ist **dadurch gekennzeichnet, dass** über den auf Höhe des Ventilkükens angeschlossene Mediumkanal aus dem Heißwasserkreislauf zurückfließendes Heizmedium auf mittlerer Höhe des Speichers in diesen zurückgeführt wird.

Durch die an das Ventil angeschlossene Mediumleitung kann von Radiatoren eines Heißwasserkreislaufes zurückfließendes Medium aus dem Ventil herausgeführt werden. Es kann wie oben erläutert zu einem Niedertemperaturheizungskreislauf geführt werden und dort für eine Verwendung in einer z. B. Fußbodenheizung eingesetzt werden. Nach dem erfindungsgemäßen Verfahren ist es aber auch möglich, dieses Heizmedium zurück in den Speicher zu führen. Die Führung erfolgt dabei nicht wie üblich in unterster Position des Speichers in das kalte Medium hinein, sondern auf einer mittleren Höhe in einen Temperaturbereich von beispielsweise etwa 50°C. Diese Temperatur weist das von Heizungsradiatoren zurückfließende Wasser häufig gleichfalls auf. Wird dieses Medium in den Speicher zurückgeführt, ist nur noch die Energie aufzubringen, um es von etwa 50°C wieder auf etwa 70°C zu erwärmen. Es findet kein Vermischen mit kalten Medien in unteren Bereichen des Speichers statt. Weniger Energieaufwand ist vorteilhaft erforderlich.

Ein Ausführungsbeispiel der erfindungsgemäßen Vorrichtung, aus dem sich weitere erfinderische Merkmale ergeben, ist in der Zeichnung dargestellt. Es zeigen:
- Fig. 1:: eine schematische Ansicht eines Heizungskreislaufes mit einem Speicher und
- Fig. 2:: eine perspektivische Schnittansicht eines erfindungsgemäßen Ventils, das in den Heizkreislauf gemäß Fig. 1 eingesetzt ist.

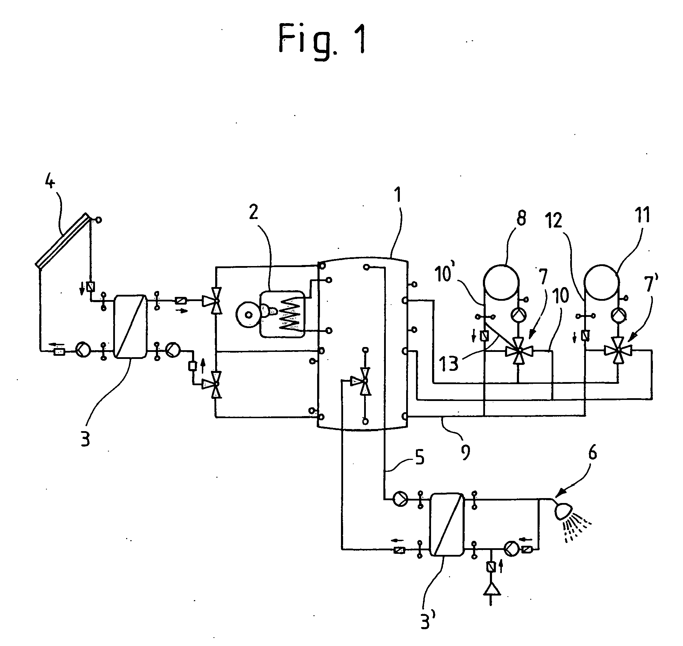

Der Heizkreislauf in Fig. 1 weist einen Speicher 1 für ein Heizmedium auf. Im Speicher 1 wird das Medium erwärmt, dazu ist dem Speicher 1 eine konventionelle Heizung 2 sowie über einen Wärmetauscher 3 eine Solarheizung 4 zugeordnet.

Im Speicher 1 stellen sich voneinander verschiedene Termperaturniveaus ein, während am Boden des Speichers 1 etwa ein Temperaturniveau für das Heizmedium von 30° herrscht, ist die Temperatur des Heizmediums im oberen Bereich des Speichers 1 >70°C. Aus diesem oberen Bereich wird über eine Leitung 5 Heizmedium zum Betreiben eines weiteren Wärmetauschers 3' für eine Frischwasserversorgung 6 entnommen.

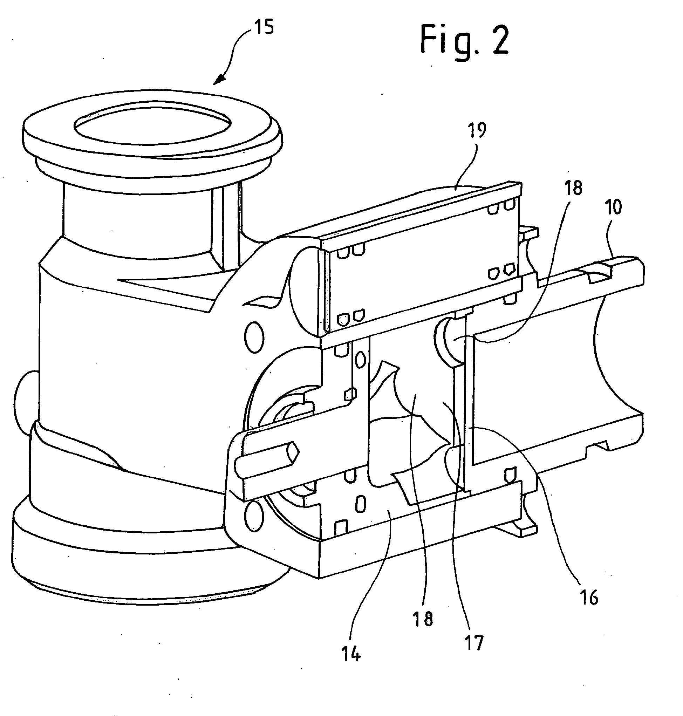

Ein erfindungsgemäßes und in Fig. 2 näher erläutertes Ventil 7 ist in einen ersten Heißwasserkreislauf 8 eingesetzt. Über den Heißwasserkreislauf 8 werden Heizungsradiatoren mit aus dem oberen Bereich des Speichers 1 entnommenem Heizungsmedium versorgt. Aus dem Heißwasserkreislauf 8 zurückfließendes Medium kann über eine Rückführleitung 9 im unteren, kühlen Bereich des Speichers 1 in diesen eingeführt werden.

Das erfindungsgemäße Ventil 7 ist als Drei-Wege-Ventil ausgebildet, es weist einen Anschluss für zumindest einen weiteren Mediumkanal 10 auf. Das Ventil 7 ist zugleich mit dem Rücklauf 10' des Heißwasserkreislaufs 8 verbunden, so dass über das Ventil 7 im Rücklauf 10' zurückströmendes und noch relativ heißes Heizungs-medium entweder wieder in Heißwasserkreislauf 8 geführt werden kann oder über den zusätzlichen Mediumkanal 10 aus dem Ventil 7 heraus und zu einem weiteren erfindungsgemäßen Ventil 7'. Dieses Ventil 7'ist in einen Niedertemperatur-kreislauf 11, beispielsweise für eine Fußbodenheizung, eingesetzt. Der Rücklauf 11 dieses Niedertemperaturkreislaufes ist mit dem Ventil 7'verbunden, so dass noch relativ warmes Medium aus dem Rücklauf 12 wieder in den Niedertemperatur-kreislauf 11 geführt werden kann. Alternativ ist es zur Rückführleitung 9 und zum Speicher 1 führbar.

Verfahrensgemäß ist noch vorgesehen, dass aus dem ersten Ventil 7 heraus relativ heißes Medium aus dem Rücklauf 10' über eine Zweigleitung 13 sowie den Mediumkanal 10 in den Speicher 1 zurückgeführt wird. Der Mediumkanal 10 mündet auf halber Höhe in den Speicher 1 ein, so dass zum Beispiel etwa 50° warmes Heizmedium hier in einen Bereich eingeführt wird, in dem etwa gleich temperiertes Heizungsmedium vorhanden ist.

Fig. 2 zeigt einen Schnitt. Dieser Schnitt verläuft auf Höhe des Ventilkükens 14 vertikal durch das Ventilgehäuse 19. Das Ventilgehäuse 19 weist zwei Mediendurchgangskanäle 15 auf, von denen in Fig. 2 einer gezeigt ist. Durch diesen Mediendurchgangskanal 15 kann beispielsweise der Rücklauf 10' des Heißwasserkreislauf 8 gemäß Fig. 1 geführt werden.

Das Ventilküken 14 ist in einer Querfließverbindung des Ventilgehäuses 19 angeordnet. An das Ventilgehäuse 1 ist auf Höhe dieses Ventilkükens 14 der Mediumkanal 10 angeschlossen. Im Bereich des Anschlusses des Mediumkanals 10 ist dabei ein als Platte 16 ausgebildeter Verschluss für den Mediumkanal 10 vorgesehen. In die Platte 16 sind Durchbrüche eingesetzt. Das Ventilküken 14 weist eine Gegenplatte 17 auf, in der gleichfalls Durchbrüche 18 angeordnet sind. Das Ventilküken 14 ist dabei drehbar aufgenommen, so dass die Durchbrüche 18 in Platte 16 und Gegenplatte 17 in Überdeckung gebracht werden können, so dass Medium in den Mediumkanal 10 einfließen kann.

## Patentansprüche

1. Ventil für flüssige Medien, insbesondere für den Einsatz von Heizungs-und/oder Photothermikanlagen, umfassend einen Ventilgehäuse zur Aufnahme eines Ventilkükens in einer Querfließverbindung zwischen zwei durch das Ventilgehäuse hindurchgeführten Mediendurchgangskanälen,
**dadurch gekennzeichnet,**
**dass** etwa auf Höhe des Ventilkükens (14) das Ventilgehäuse (19) mit einem Anschluss für zumindest einen weiteren Mediumkanal (10) ausgerüstet ist.

2. Ventil nach Anspruch 1, **dadurch gekennzeichnet, dass** im Bereich des Anschlusses für den Mediumkanal (10) ein mit dem Ventilküken (14) zusammenwirkendes Verschlusselement für den Mediumkanal (10) angeordnet ist.

3. Ventil nach Anspruch 2, **dadurch gekennzeichnet, dass** das Verschlusselement (10) eine Platte (16) mit Durchbrüchen (18) ist und am Ventilküken (14) eine Gegenplatte (17) mit korrespondierenden Durchbrüchen (18) angeordnet ist.

4. Ventil nach einem der Ansprüche 1 bis 3, **dadurch gekennzeichnet, dass** das Ventilküken (14) in einer Führung verdrehbar ist und dass dem Ventilküken (14) ein Motorantrieb zugeordnet ist.

5. Ventil nach Anspruch 4, **dadurch gekennzeichnet, dass** der Motorantrieb ein elektrischer 90°-Schrittmotor ist.

6. Ventil nach einem der vorhergehenden Ansprüche, **dadurch gekennzeichnet, dass** es in einen Heizungskreislauf (8) mit zumindest einem Speicher (1) zur Bevorratung von Heizmedien eingesetzt ist, wobei der im Bereich des Ventilkükens (14) einmündende Mediumkanal (10) bis zum Speicher (1) verläuft und in diesen in etwa mittlerer Höhe eintritt.

7. Ventil nach Anspruch 6, **dadurch gekennzeichnet, dass** an dem Mediumkanal (10) zumindest eine zu einem Niedertemperaturheizkreis (11) führende Leitung angeschlossen ist.

8. Ventil nach einem der Ansprüche 4 bis 7, **dadurch gekennzeichnet, dass** eine Einstelleinheit zum Drehen des Ventilkükens (14) an einer Vorderseite des Ventilgehäuses (19) angeordnet ist und dass der Mediumkanal (10) an der Rückseite des Ventilgehäuses (19) in dieses einmündet.

9. Verfahren zum Betreiben einer Heizungsanlage mit zumindest einem Heißwasserkreislauf zum Beschicken von Heizungsradiatoren, mit einem Heizungsmediumspeicher und mit zumindest einem Ventil nach einem der Ansprüche 1 bis 8,
**dadurch gekennzeichnet,**
**dass** über den auf Höhe des Ventilkükens (14) angeschlossenen Mediumkanal (10) aus dem Heizwasserkreislauf (8) zurückfließendes Medium auf mittlerer Höhe des Speichers (1) in diesen zurückgeführt wird.
